# FASCICULE DE BREVET EUROPEEN

(11) **EP 1 817 942 B1**
(45) Date de publication et mention de la délivrance du brevet: **05.09.2012**
(21) Numéro de dépôt: 05818929.1
(22) Date de dépôt: 16.11.2005
(51) Int. Cl.: H05B 3/84, H05B 6/14, B23K 1/00

(54) **PROCEDE ET DISPOSITIF POUR BRASER DES RACCORDS PAR CHAUFFAGE INDUCTIF**
VERFAHREN UND VORRICHTUNG ZUM LÖTEN VON VERBINDUNGEN MITTELS WÄRMEINDUKTION
METHOD AND DEVICE FOR BRAZING CONNECTIONS BY INDUCTION HEATING

(30) Priorité: 30.11.2004 DE 102004057630
(43) Date de publication de la demande: 15.08.2007
(73) Titulaire: SAINT-GOBAIN GLASS FRANCE, 92400 Courbevoie (FR)
(72) Inventeur: REUL, Bernhard, 52134 HERZOGENRATH (DE)
(74) Mandataire: Aupetit, Muriel J. C.
(86) Numéro de dépôt international: PCT/FR2005/050952
(87) Numéro de publication internationale: WO 2006/059025

(56) Documents cités:
- EP-A- 0 070 909
- DE-A1- 4 419 258
- GB-A- 1 183 316
- GB-A- 2 139 684
- US-A- 3 813 519

## Description

L'invention concerne un procédé pour braser des raccords par chauffage inductif, présentant les caractéristiques du préambule de la revendication 1, ainsi qu'un dispositif particulièrement apte à la mise en oeuvre de ce procédé.

On connaît par le document GB-1 183 316 des procédés pour le brasage inductif de fils de chauffage placés en parallèle avec leurs conducteurs collecteurs. Dans le premier cas de réalisation, les fils de chauffage sont fixés par collage sur une surface de vitre et le conducteur collecteur - une mince bande de cuivre étamée - est posé par dessus. L'outil de brasage est guidé sur la même surface de vitre à une distance d'entrefer constante le long du conducteur collecteur à l'aide de galets d'écartement. Dans le deuxième cas de réalisation, les fils de chauffage et les conducteurs collecteurs sont inaccessibles de l'extérieur dans une vitre feuilletée composée de deux vitres et d'une couche adhésive. Ici, le contact électrique entre les conducteurs de chauffage et leurs conducteurs collecteurs ne doit être réalisé qu'après la fabrication de la vitre feuilletée. A cet effet, on utilise le pouvoir du champ magnétique, de transmettre sans contact à travers une des vitres l'énergie nécessaire pour faire fondre la brasure; cette vitre sert en l'occurrence "d'écarteur" pour l'outil de brasage guidé à la main.

Il est connu que de telles vitres sont utilisées surtout dans la construction automobile, mais aussi dans le bâtiment. D'autres cas d'application typiques sont par exemple le brasage de semelles de contact pour des lignes de raccordement. Celles-ci sont de plus en plus petites pour gagner de la place dans la technique automobile, et elles sont encore souvent pourvues de raccords de câble, qui peuvent être gênants lors de l'application directe d'outils de brasage (voir EP 477 069 B1). De même, des composants électroniques comme des amplificateurs ou analogues sont déjà brasés directement à des champs de conducteurs d'antenne imprimés sur une surface extérieure de vitre.

Pour des raisons techniques liées à la fabrication et pour pouvoir raccorder vers l'extérieur une pluralité de raccords avec un câble multiple commun, on place la plupart du temps plusieurs assemblages brasés ou points de brasage très près les uns des autres (voir DE 195 36 131 C2). Avec des outils de brasage conventionnels, ceux-ci doivent cependant être brasés individuellement l'un après l'autre.

Cependant, l'application de fers à braser directement sur les pièces de raccordement concernées à partir de la "face avant" ouverte est souvent un inconvénient, d'autant plus qu'alors - et en tous cas dans une production en série industrielle avec de courts temps de passage - il peut se produire des positionnements erronés dus à l'action inévitable de forces.

Pour le brasage par induction, les fabricants d'appareils recommandent cependant typiquement une haute fréquence comprise entre 700 et 900 kHz en fonction de la puissance thermique à appliquer. En même temps, on n'a besoin que d'une puissance électrique relativement faible (1 à 4 kW).

Des essais réalisés dans les conditions des cas d'application possibles discutés plus haut avec les fréquences relativement hautes recommandées n'ont cependant pas permis d'obtenir des résultats satisfaisants. En particulier, les structures conductrices servant de faces de raccordement par brasage sur la surface de vitre, qui se composent d'une couche épaisse cuite en une pâte de sérigraphie avec une teneur en argent relativement élevée, peuvent s'échauffer de manière excessive et évacuer beaucoup de chaleur, tandis qu'en même temps les composants à braser ne sont pas encore suffisamment chauds. Une cause pourrait en être que la structure conductrice, respectivement sa matière, possède une grande absorption à l'égard des ondes générées par induction. L'échauffement par l'utilisation de hautes fréquences ne pénètre pas ou alors très lentement en profondeur dans un corps volumineux, mais il reste plutôt à la surface de celui-ci (ceci est également appelé "effet de peau", voir à ce sujet DE 694 30 275 T2, page 36). Par conséquent, les courts temps de passage ne permettent pas d'atteindre avec certitude la profondeur de pénétration nécessaires jusqu'à l'autre face de la couche épaisse concernée.

Le document DE 196 36 216 A1 décrit un dispositif et un procédé pour le chauffage par induction de pièces, en particulier pour la trempe et le brasage, dans lequel une boucle ou une bobine d'induction est combinée avec un corps conducteur pour dévier ou orienter le champ magnétique. La boucle/bobine se compose d'un matériau tubulaire bon conducteur électrique, qui est refroidi pendant l'opération de brasage au moyen d'un fluide de refroidissement en circulation. La plage de travail ou de fréquence indiquée pour le chauffage de métaux par induction est de 10 kHz à 10 MHz. Dans ce document, on ne décrit cependant en détail qu'un cas d'application pour la trempe des bords de trous alésés. Le corps conducteur mentionné forme un noyau, qui peut être introduit dans l'alésage respectif. Le document ne donne aucune autre indication pour la réalisation d'installations ou de procédés de brasage par chauffage inductif.

Le problème à la base de l'invention est de procurer un procédé amélioré pour le brasage inductif de raccords sur des vitres ainsi qu'un dispositif particulièrement apte à la mise en oeuvre de ce procédé.

Ce problème est résolu selon l'invention par les caractéristiques de la revendication 1 en ce qui concerne le procédé et par les caractéristiques de la revendication 12 en ce qui concerne le dispositif. Les caractéristiques des revendications secondaires subordonnées respectivement aux revendications indépendantes présentent des formes de réalisation avantageuses de l'invention.

On accorde par conséquent la grandeur, respectivement la forme de la surface d'une boucle ou d'une bobine d'induction, qui est disposée dans un outil de brasage, avec la grandeur, respectivement avec la forme des zones de contact multiples respectives. Cette surface peut être très petite, elle vaut cependant en règle générale plusieurs centimètres carrés. Par exemple, elle vaut 0,5 à 70 cm², et éventuellement plus encore.

Ces outils peuvent être appliqués sur la surface de la vitre concernée opposée à la face de brasage. Le champ magnétique émis par ceux-ci traverse la matière de la vitre pratiquement sans amortissement, de sorte que la chaleur de brasage requise n'est dégagée que derrière la vitre. Même un éventuel revêtement local opaque (non conducteur) du bord de la surface de la vitre est traversé par le champ magnétique pratiquement sans amortissement. En même temps, la surface lisse de la vitre forme une surface d'appui idéale pour l'outil, et même la distance de celui-ci au point de brasage proprement dit est maintenue pratiquement constante d'une vitre à l'autre par l'épaisseur de vitre et de couche reproductible avec des écarts négligeables. Il n'est toutefois pas absolument nécessaire de disposer les outils de brasage sur la face de la vitre située en face des points de brasage, si le réglage de la distance nécessaire peut être respecté par d'autres moyens. De même, une application directe des outils de brasage sur les pièces à braser est possible.

Cette technique peut être mise en oeuvre aussi bien avec des vitres simples qu'avec des vitres feuilletées.

Dans des productions en série, les outils peuvent dès lors avantageusement être montés en position fixe dans des dispositifs ou des stations de brasage, dans lesquels les vitres préparées pour la réalisation des raccords de brasage sont introduites et positionnées. La disposition stationnaire des outils présente l'avantage supplémentaire que les conduites d'alimentation nécessaires ne doivent pas être déplacées.

En s'écartant des recommandations des fabricants d'appareils, on a abaissé nettement à titre expérimental la fréquence des ondes induites, respectivement du champ magnétique, dans une plage comprise entre 5 et 150 kHz. La profondeur de pénétration du champ magnétique dans les cas d'application décrits est de ce fait nettement plus grande. Pourtant, il faut disposer d'une puissance électrique accrue, parce que le rayonnement à fréquence relativement basse subit des pertes de transmission relativement élevées dans l'entrefer et dans le corps de la vitre. On doit aussi opérer avec une plus forte intensité du champ magnétique à basse fréquence.

Dans l'optique des résultats de brasage nettement améliorés, qu se répercutent favorablement sur la production de la fabrication en série, cet aspect doit cependant être pris en compte. En même temps, on atteint une nette accélération de la production parce que, même pour des temps de passage très courts, tous les points de brasage voisins même dans des champs de raccords de brasage relativement étendus sont brasés en même temps et avec une grande sécurité de traitement. Avec les outils de brasage à haute fréquence relativement petits, un mouvement relatif entre l'outil et la vitre respective serait en outre nécessaire. Il s'avère favorable, dans le cadre de la présente invention, que les boucles ou les bobines pour le brasage par induction à des fréquences relativement basses présentent des volumes nettement plus grands que les boucles ou les bobines convenant pour une induction à haute fréquence.

On a exécuté avec des boucles ou des bobines appropriées de grande étendue, différents brasages expérimentaux, qui ont tous conduit à des résultats satisfaisants. Ainsi par exemple, on a brasé sur des vitres typiques équipées de manière différente un raccord d'antenne à cinq pôles, quatre raccords d'antenne individuels sous forme de boutons à pression, ainsi que deux raccords de conducteurs de chauffage en plus de deux raccords d'antenne, le tout dans la région d'un revêtement de bord opaque de la vitre avec des voies conductrices électriques imprimées sur celle-ci. Par suite de la bonne pénétration des lignes de champ dans ces dernières structures conductrices pour une basse fréquence d'induction, les corps respectivement les contacts (métalliques) des éléments de contact ont été chauffés suffisamment fortement et rapidement par le champ magnétique, pour faire fondre leur étamage préalable et les assembler fiablement aux faces de raccordement du côté de la vitre.

Les outils de brasage ne subissent en outre pratiquement aucune usure. Les outils de saisie pour le placement des pièces à braser peuvent être réalisés de manière plus simple et plus compacte sans outils de brasage.

Pendant l'opération de brasage, les pièces à raccorder ne sont pressées que librement sur la surface de la vitre à l'aide de moyens de serrage simples, qui ne sont eux-mêmes pas chauffés par le champ magnétique. Ces outils peuvent se composer par exemple de matière plastique ou de céramique ou des deux, respectivement être garnis de parties non métalliques dans les zones de leur contact avec les pièces à braser. Pour une optimisation et une déviation locales du champ magnétique, on peut aussi employer des moyens de serrage en matériaux ferritiques.

Par l'utilisation du brasage par la "face arrière" d'une vitre (qui est la plupart du temps la face extérieure dans un véhicule) et l'apport de chaleur direct qui en résulte, on obtient le grand avantage structurel supplémentaire, que l'on peut braser des éléments structurels plus complexes.

En particulier, abstraction faite du point de brasage proprement dit, les pièces à raccorder ne doivent présenter aucune surface métallique libre, mais elles peuvent être par exemple entièrement enrobées ou surmoulées de matière plastique, le cas échéant même contenir des composants disposés dans un deuxième plan immédiatement au-dessus des points de contact (voir DE 198 56 663 C2). De telles pièces pourront être utilisées sans protection particulière dans leur environnement de montage. Un contrôle visuel du brasage est bien entendu également possible dans le point de brasage lui-même, par exemple par des "trous de contrôle" (voir DE 102 49 992 C1).

Naturellement, la forme de la boucle ou de la bobine, respectivement de l'outil qui la contient, doit être adaptée aux particularités respectives, concrètement aux géométries de raccordement envisagées (surfaces et formes des pièces dans la région des faces de raccordement par brasage), afin que les lignes de champ magnétique puissent être orientées de façon optimale sur les pièces à chauffer. L'outil de brasage (13) comporte, en plus de la boucle ou de la bobine, des composants pour dévier et guider les lignes de champ du champ magnétique. Il est particulièrement avantageux de disposer des éléments ferritiques dans l'outil, pour optimiser le tracé des lignes de champ. Pour l'adaptation à des surfaces de vitre cintrées, un préformage correspondant et/ou une couche intermédiaire élastique sur la face de contact de l'outil peut être avantageux.

D'autres détails et avantages de la solution selon l'invention apparaîtront par les dessins annexés d'exemples de cas d'application possibles, ainsi que par leur description détaillée.

Dans ces représentations schématiques et sans échelle particulière,
- La Fig. 1: représente une vue d'une vitre avec des raccords à braser, qui est posée dans un dispositif pour le brasage inductif de ces raccords à braser; et
- La Fig. 2: montre un détail agrandi de la Fig. 1 dans la région d'un point de raccordement par brasage multiple.

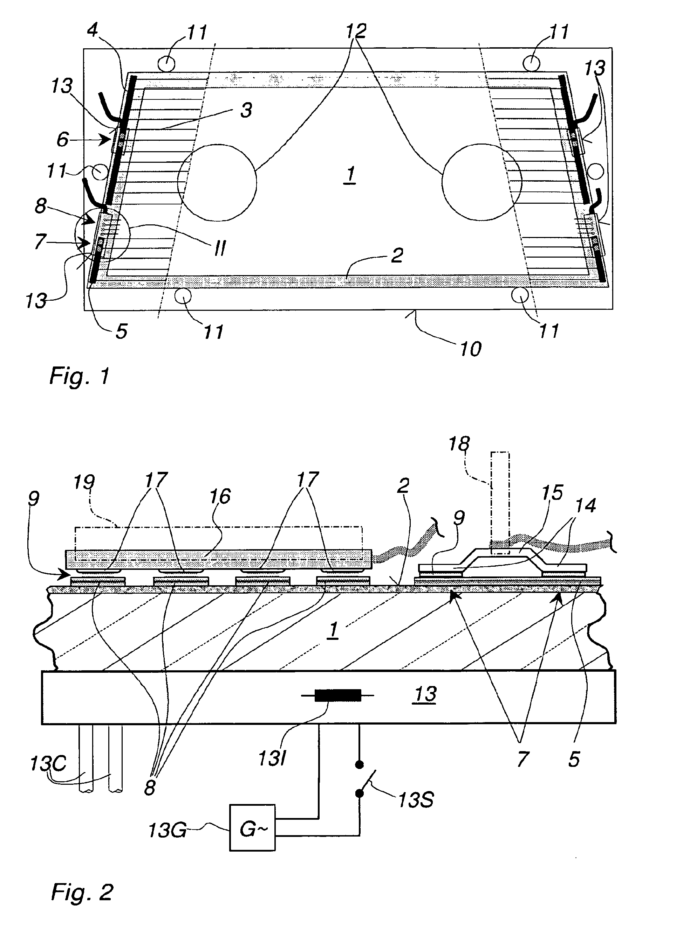

La Fig. 1 montre une vitre trapézoïdale 1 en verre ou en matière plastique, dont la surface supérieure dans le sens de la vision est pourvue le long de son bord d'un revêtement opaque 2 (ici ombré en gris, mais en réalité généralement noir), électriquement non conducteur. Il s'agit par exemple d'une vitre arrière d'un véhicule automobile, représentée ici sans courbure pour simplifier. Sur sa surface, il est en outre prévu des voies ou des structures conductrices électriques 3, par exemple des conducteurs de chauffage et des conducteurs d'antenne, qui s'étendent dans le champ de vision de la vitre et/ou du côté du bord jusque sur le revêtement 2. Le long du bord gauche de la vitre 1, il est prévu des conducteurs collecteurs 4 et 5 sur la surface du revêtement 2. En outre, il est prévu plusieurs faces de raccordement 6, 7, 8 (montrées en gris plus clair pour l'illustration) destinées à réaliser le raccordement électrique des structures conductrices 3 respectivement des conducteurs collecteurs, et sur lesquelles on reviendra encore en détail plus loin.

Sur le bord droit de la vitre, on a indiqué une configuration identique inversée de conducteurs collecteurs et de faces de raccordement sans les repères numériques correspondants. Les configurations des conducteurs collecteurs et des faces de raccordement peuvent en réalité être différentes sur les deux côtés de la vitre. Les faces de raccordement et les points de brasage peuvent aussi être disposés sur les longs côtés de la forme de vitre montrée ici.

L'implantation des structures conductrices de chauffage et d'antenne 3 dans le champ de vision central de la vitre 1 n'est pas représentée davantage. Pour la présente description, ceci est sans importance, car elle ne porte que sur la réalisation des raccords électriques de bord des structures conductrices 3 par brasage avec production de chaleur par induction.

Les structures conductrices 3 sont usuellement réalisées, en plus des conducteurs collecteurs 4, 5 et des faces de raccordement 6, 7, 8, par impression (sérigraphique) d'une pâte d'impression conductrice (contenant de l'argent) par la technique de la couche épaisse et cuisson ultérieure (sur des vitres en verre, de préférence lors du cintrage).

La vitre 1 est placée dans un dispositif 10 indiqué par un cadre, auquel appartiennent entre autres les butées 11, les appuis 12 et les outils de brasage 13. Alors que les butées 11 sont appliquées contre les arêtes latérales de la vitre 1, pour positionner celle-ci dans le plan, les appuis 12 et les outils de brasage 13 se trouvent, dans le sens de la vision, derrière / en dessous de la vitre 1. On voit que les outils de brasage 13 fixés dans le dispositif recouvrent entièrement les régions des faces de raccordement, en projection verticale sur la surface de la vitre. Leur surface orientée vers la vitre vaut plusieurs centimètres carrés.

Les faces de raccordement 6, 7 et 8 doivent être raccordées avec l'extérieur du vitrage à des lignes de raccordement ou d'alimentation électriques correspondant à leur fonction, respectivement à des câbles d'antenne, qui ne sont pas représenté(e)s dans la Fig. 1.

Un cercle désigné par "II" sur le bord gauche de la vitre 1 entoure la région qui est représentée en un détail agrandi dans la Fig. 2, en vue d'expliquer en détail le procédé selon l'invention ainsi que le dispositif correspondant. La région circonscrite est également désignée dans la suite comme le champ de raccordement. Celui-ci présente au total une extension de surface définie, à laquelle l'outil de brasage associé est adapté.

Le champ de raccordement recouvert par un outil de brasage unitaire pourrait au besoin être encore étendu. De même, un outil de brasage individuel peut comporter deux spires ou davantage. Ceci serait recommandé, lorsque l'on veut réaliser des points de brasage sur des vitres planes ou cintrées seulement légèrement ou en cylindre.

Dans la Fig. 2, on reconnaît une vue latérale de la région de bord de la vitre 1 posée à plat, vue du côté gauche de la Fig. 1. Pour des éléments identiques, on a conservé les mêmes repères numériques que dans la Fig. 1. On a certes représenté une vitre 1 plane, mais l'invention peut naturellement être appliquée également à des vitres cintrées.

On reconnaît sur le revêtement opaque 2 les deux faces de raccordement 7 et les quatre faces de raccordement 8 du champ de raccordement dans le cercle II de la Fig. 1. Sur les faces de raccordement jumelles 7, on a appliqué les deux semelles de brasage 14 d'un élément de contact 15 en forme de pont pourvu d'un câble de raccordement. De tels éléments de contact avec un cordon souple brasé sont connus dans l'état de la technique (par exemple EP 0 477 069 B1). Ils sont souvent utilisés pour le raccordement électrique de champs de chauffage au réseau de bord d'un véhicule. Précisément, de tels composants sont critiques pour le brasage ultérieur, parce que le brasage du cordon ne doit pas être chauffé de manière excessive. Ceci peut être évité de façon sûre par le procédé selon l'invention.

Sur les quatre faces de raccordement 8 est appliqué un élément de contact multiple 16 également connu en soi, qui comporte quatre contacts métalliques 17 qui doivent chacun être brasés à une des faces de raccordement 8. De même, l'élément de contact multiple 16 est relié par un câble de raccordement. Celui-ci peut par exemple être un câble d'antenne, le cas échéant dans un environnement d'antenne diversité.

L'élément de contact multiple 16 présente une gaine, de préférence en une matière plastique appropriée (électriquement isolante), dans laquelle ses contacts 17 avec ses raccords de ligne vers le câble de raccordement sont noyés. On n'a pas besoin de surfaces métalliques libres sur la face de l'élément de contact multiple située à l'opposé de la vitre 1. Dans la gaine peuvent également être disposés d'autres composants électriques et/ou électroniques (par exemple des amplificateurs).

Chacun des six points de brasage montrés dans la Fig. 2 est pourvu d'une mince couche de brasure 9 contenant du plomb ou exempte de plomb (étamage préalable ou dépôt de brasure), le cas échéant avec un fondant intégré ou appliqué par la suite. Il peut éventuellement suffire d'appliquer un dépôt de brasure seulement sur une des deux faces à braser, donc soit sur les faces de raccordement 7, 8 soit sur les semelles de brasage 14 respectivement les contacts 17, si l'on garantit que l'énergie injectée peut échauffer toutes les pièces suffisamment pour assurer un bon brasage des deux côtés et si la surface non étamée peut être mouillée par la brasure.

Les épaisseurs du revêtement 2, des faces de raccordement 7 et 8 et du dépôt de brasure ne sont pas reproduites à l'échelle ici.

On a indiqué en traits mixtes des moyens de serrage 18, 19, qui positionnent et pressent chacun la semelle de contact 14 et l'élément de contact multiple 16 sur les points de contact ou de brasage. Ils ne doivent pas avoir de contact galvanique avec les points de brasage. Ces moyens de serrage peuvent par exemple et avantageusement être en même temps des outils de saisie et de positionnement télécommandés dans une ligne de fabrication automatisée. Cette double fonction est indiquée par le léger recouvrement des moyens de serrage avec les éléments de contact illustrés. Ils prélèvent les éléments de contact d'abord librement mobiles dans les magasins de réserve respectifs, les positionnent sur les faces de raccordement correspondantes et les maintiennent pendant l'opération de brasage jusqu'à la solidification de la brasure.

L'outil de brasage 13 est appliqué sur la face inférieure de la vitre 1, située à l'opposé des points de contact 7 et 8, avec (au moins) une boucle ou une bobine d'induction 13I qui est alimentée par un générateur commercial 13G avec une tension alternative à fréquence et puissance réglables. De manière symbolique, on a également représenté un interrupteur 13S dans la liaison entre le générateur et la bobine, avec lequel on peut commander le fonctionnement de la boucle d'induction 13I. Enfin, l'outil 13 peut au besoin être refroidi par des tuyaux de raccordement 13C. A la différence de la représentation schématique on rassemblera éventuellement l'arrivée du fluide de refroidissement et les lignes d'alimentation électrique.

Les outils de brasage 13, qui sont grands comparativement aux boucles ou bobines d'induction à haute fréquence conventionnelles, comportent des bobines ou des boucles dont les dimensions correspondent sensiblement à la longueur et à la largeur de l'outil de brasage. Des espaces intermédiaires peuvent être comblés de manière connue en soi à l'aide de corps en ferrite ou d'autres matériaux également adéquats. De cette manière, le champ magnétique qu'elles émettent peut être optimisé de telle façon qu'il soit dévié et qu'il agisse de manière aussi intensive et concentrée que possible sur les points de brasage. On peut donc moins obtenir une grande homogénéité que, au contraire, échauffer aussi rapidement et intensément que possible des points déterminés ou de petites surfaces - à savoir les points de brasage et les éléments de contact métalliques appliqués sur ceux-ci.

Dans le même sens, il peut aussi être avantageux de munir également les moyens de serrage d'éléments de ferrite ou de composants de mêmes fonctions pour former et guider les lignes de champ. Cette option, tout comme l'outil de brasage proprement dit, doit être accordée individuellement au champ de raccordement respectif et à ses points de brasage.

Pour obtenir en permanence une haute qualité de brasage, il est important de maintenir la distance entre l'outil de brasage 13 et les points de brasage aussi constante que possible sur chaque vitre. Dans l'exemple de réalisation illustré ici, l'outil de brasage est par conséquent appliqué directement sur la surface de la vitre. Naturellement, il faut empêcher toute dégradation de la surface lisse de la vitre. Il peut ici être prévu, selon l'invention, un entrefer très étroit, bien défini, entre l'outil de brasage et la face inférieure de la vitre, pour éviter complètement tout contact.

Donc, si un outil avec une bobine d'induction doit être appliqué sur une surface de vitre cintrée au lieu de la vitre plane 1 montrée ici, il devrait être adapté au contour local de la vitre, au sens d'un positionnement reproductible précis, respectivement il devrait épouser celui-ci, éventuellement au moyen d'une couche intermédiaire élastique.

De préférence, ces outils de brasage sont disposés de façon fixe/stationnaire dans le dispositif 10. La vitre à traiter est chaque fois placée à l'aide de moyens de transport non représentés et est positionnée entre les butées 11 sur les appuis 12.

Bien entendu, il est cependant également possible d'appliquer des outils de brasage mobiles à l'aide de robots dans des positions reproductibles sur une vitre à traiter. On préférera par exemple cette solution lorsqu'il ne faut pas traiter de grands nombres de pièces de vitres restant toujours identiques, ou lorsqu'il faut traiter un changement fréquent de modèle sur le même dispositif.

Pour la réalisation des assemblages brasés, la boucle d'induction 13I est alimentée en courant à la fréquence désirée (entre 5 et 100 kHz) par branchement de son alimentation électrique (fermeture de l'interrupteur 13S). On règle une puissance typique de l'ordre de 1,3 à 15 kW, qui peut naturellement être modifiée selon la distance de la boucle ou de la bobine, la surface (totale) des points de brasage et les masses à chauffer. Le champ magnétique traverse la matière de la vitre épaisse de quelques millimètres et le revêtement de bord opaque 2 épais de quelques micromètres sans amortissement excessif; l'amortissement est d'autant plus faible que les entrefers sont plus étroits. Dans les composants métalliques des points de contact 7, 8 ainsi que des dépôts de brasure 9 et aussi dans les composants métalliques (pieds de brasage 14, contacts 17) des éléments de contact appliqués 15 et 16, il y a dégagement de chaleur. La basse fréquence présente, en plus de l'avantage d'une profondeur de pénétration relativement grande, l'avantage supplémentaire que l'on peut aussi braser certaines pièces sensibles aux ondes électromagnétiques, sans détruire ces pièces.

La durée d'enclenchement nécessaire du champ magnétique jusqu'à la fusion complète de la brasure ainsi que la meilleure plage de fréquence peuvent être déterminées de façon simple et bien reproductible par des essais, et simulées par des logiciels appropriés. Après l'opération de brasage, le champ magnétique est coupé (l'interrupteur 13S est ouvert). La vitre 1 est encore maintenue brièvement, ainsi que les moyens de serrage 18, 19, jusqu'à ce que la brasure se soit solidifiée et que les raccordements électriques tiennent sans fixation mécanique supplémentaire. Ensuite, la vitre 1 est transmise aux opérations de traitement suivantes.

## Revendications

1. Procédé pour braser une pluralité de raccords électriques, dans lequel
- des éléments de contact (15, 16) doivent être brasés avec des faces de raccordement par brasage (6, 7, 8) disposées sur une vitre non métallique (1), et
- un champ magnétique ayant une fréquence prédéterminée est émis par un outil de brasage (13) comportant une boucle ou une bobine (13I) et recouvrant la région de plusieurs faces de raccordement par brasage, en direction des points de brasage afin de chauffer ceux-ci par induction, **caractérisé en ce que** l'on dimensionne la grandeur et la forme de l'outil de brasage (13) avec la boucle ou la bobine (13I) en fonction de la surface sur laquelle sont situés plusieurs points de brasage qui doivent être chauffés simultanément en une opération de brasage, l'outil de brasage (13) comportant, en plus de la boucle ou de la bobine, des composants pour dévier et guider les lignes de champ du champ magnétique, et **en ce que** l'on adapte la fréquence de la tension alternative appliquée à la boucle ou à la bobine à la géométrie de raccordement, et on la règle à 150 kHz au maximum.

2. Procédé selon la revendication 1, **caractérisé en ce que** l'on règle la fréquence du champ magnétique entre 5 et 150 kHz.

3. Procédé selon la revendication 1, **caractérisé en ce que** l'on règle la fréquence du champ magnétique entre 10 et 100 kHz.

4. Procédé selon la revendication 1, **caractérisé en ce que** l'on règle la fréquence du champ magnétique entre 12 et 70 kHz.

5. Procédé selon la revendication 1, **caractérisé en ce que** l'on règle la fréquence du champ magnétique entre 15 et 40 kHz.

6. Procédé selon l'une quelconque des revendications précédentes, **caractérisé en ce que** l'on applique au moins un outil de brasage (13) directement ou avec un faible entrefer sur une surface de la vitre située à l'opposé des points de brasage et on émet son champ magnétique à travers la vitre.

7. Procédé selon l'une quelconque des revendications précédentes, **caractérisé en ce que** l'on fixe les éléments de contact à braser (15,16) avec les faces de raccordement par brasage (6, 7, 8) sur les faces de raccordement par brasage à l'aide de moyens de serrage (18, 19) métalliques, en particulier ferritiques, ou non métalliques.

8. Procédé selon la revendication 7, **caractérisé en ce que** l'on utilise des moyens de serrage combinés avec des outils pour saisir et positionner les éléments de contact (15, 16).

9. Procédé selon l'une quelconque des revendications précédentes, **caractérisé en ce que** l'on fixe la vitre (1) et ledit au moins outil de brasage (13) de façon stationnaire dans un dispositif (10) au moins pendant l'opération de brasage.

10. Procédé selon l'une quelconque des revendications précédentes, dans lequel les faces de raccordement ou les éléments de contact à braser ou les deux sont pourvus d'un dépôt de brasage (9) contenant du plomb ou exempt de plomb, éventuellement avec un fondant intégré ou appliqué ultérieurement.

11. Procédé selon l'une quelconque des revendications précédentes, **caractérisé en ce que** l'on utilise un robot pour guider et appliquer l'outil de brasage (13) sur la vitre (1) ou la vitre sur l'outil de brasage (13).

12. Dispositif pour la mise en oeuvre du procédé selon l'une quelconque des revendications précédentes, comprenant
- des moyens (10, 11, 12) pour fixer la vitre (1) pendant l'opération de brasage,
- au moins un outil de brasage (13) avec au moins un boucle ou une bobine (13I) apte à émettre un champ magnétique, dont la grandeur correspond à une surface d'un champ de raccordement avec plusieurs faces de raccordement disposé sur la vitre,
**caractérisé en ce qu'**il comprend en outre
- des moyens pour le positionnement mutuel de l'outil de brasage (13) et du champ de raccordement, de telle façon que le champ magnétique produit par l'outil de brasage chauffe de façon fiable les points de brasage, l'outil de brasage (13) comportant, en plus de la boucle ou de la bobine, des composants pour dévier et guider les lignes de champ du champ magnétique,
- un générateur (13G) pouvant être raccordé à la boucle ou à la bobine (13I) et apte à produire une tension alternative avec une fréquence de 5 à 150 kHz.

13. Dispositif selon la revendication 12, dont l'outil de brasage (13) comporte plus d'une boucle ou bobine (13I).

14. Dispositif selon l'une quelconque des revendications de dispositif précédentes, dont l'outil de brasage (13) est muni d'une couche intermédiaire élastique pour l'application sur une surface de vitre.

15. Dispositif selon l'une quelconque des revendications de dispositif précédentes avec un robot pour guider et appliquer ledit au moins outil de brasage (13) sur la vitre et/ou la vitre sur l'outil de brasage.

16. Dispositif selon l'une quelconque des revendications de dispositif précédentes avec des moyens de serrage (18, 19) pour presser les éléments de contact (15, 16) sur les points de brasage.

17. Dispositif selon la revendication 16, dont les moyens de serrage sont combinés avec des outils de saisie pour positionner les éléments de contact.

18. Dispositif selon la revendication 16 ou 17, dont les moyens de serrage sont équipés de composants pour dévier et guider les lignes de champ du champ magnétique.

## Claims

1. Method for soldering a plurality of electrical connections, in which
- contact elements (15, 16) have to be soldered to soldered-connection faces (6, 7, 8) positioned on non-metallic glazing (1), and
- a magnetic field of predetermined frequency is emitted by a soldering tool (13) comprising a loop or a coil (13I) and covering the region of several soldered-connection faces, towards the solder spots so as to heat these by induction, characterized it that the magnitude and the shape of the soldering tool (13) is sized with the loop or the coil (13I) according to the surface area over which several solder spots that have to be heated simultaneously in a soldering operation are situated, the soldering tool (13) comprising, in addition to the loop or the coil, components for deflecting and guiding the field lines of the magnetic field, and in that the frequency of the AC voltage applied to the loop or to the coil is tailored to the connection geometry and set to 150 kHz at most.

2. Method according to Claim 1, **characterized in that** the frequency of the magnetic field is set to between 5 and 150 kHz.

3. Method according to Claim 1, **characterized in that** the frequency of the magnetic field is set to between 10 and 100 kHz.

4. Method according to Claim 1, **characterized in that** the frequency of the magnetic field is set to between 12 and 70 kHz.

5. Method according to Claim 1, **characterized in that** the frequency of the magnetic field is set to between 15 and 40 kHz.

6. Method according to any one of the preceding claims, **characterized in that** at least one soldering tool (13) is applied directly or with a small stand-off to a surface of the glazing on the opposite side to the solder spots and its magnetic field is emitted through the glazing.

7. Method according to any one of the preceding claims, **characterized in that** the contact elements (15, 16) to be soldered to the soldered-connection faces (6, 7, 8) are fixed to the soldered-connection faces using metal clamping means (18, 19), particularly ferrite ones, or using non-metallic clamping means.

8. Method according to Claim 7, **characterized in that** clamping means combined with tools are used to hold and position the contact elements (15, 16).

9. Method according to any one of the preceding claims, **characterized in that** the glazing (1) and the said at least one soldering tool (13) are fixed stationary in a device (10) at least during the soldering operation.

10. Method according to any one of the preceding claims, in which the connection faces or the contact elements that are to be soldered, or both, are provided with a deposit of solder (9) containing lead or free of lead, possibly with a flux incorporated or applied subsequently.

11. Method according to any one of the preceding claims, **characterized in that** a robot is used to guide and apply the soldering tool (13) on(to) the glazing (1) or the glazing on(to) the soldering tool (13).

12. Device for implementing the method according to any one of the preceding claims, comprising
- means (10, 11, 12) for fixing the glazing (1) during the soldering operation,
- at least one soldering tool (13) with at least one loop or one coil (13I) able to emit a magnetic field, the magnitude of which corresponds to a surface area of a field of connection with several connection faces positioned on the glazing,
**characterized in that** it further comprises
- means for the mutual positioning of the soldering tool (13) and of the connection field, in such a way that the magnetic field produced by the soldering tool reliably heats the solder spots, the soldering tool (13) comprising, in addition to the loop or the coil, components for deflecting and guiding the field lines of the magnetic field,
- a generator (13G) adapted to be connected to the loop or to the coil (13I) and able to produce an AC voltage at a frequency from 5 to 150 kHz.

13. Device according to Claim 12 in which the soldering tool (13) comprises more than one loop or coil (13I).

14. Device according to any one of the preceding device claims in which the soldering tool (13) is equipped with an elastic intermediate layer to press against a surface of the glazing.

15. Device according to any one of the preceding device claims with a robot for guiding and applying the said at least one soldering tool (13) on(to) the glazing and/or the glazing on(to) the soldering tool.

16. Device according to any one of the preceding device claims with clamping means (18, 19) for pressing the contact elements (15, 16) onto the solder spots.

17. Device according to Claim 16 in which the clamping means are combined with holding tools for positioning the contact elements.

18. Device according to Claim 16 or 17 in which the clamping means are equipped with components for deflecting and guiding the field lines of the magnetic field.

## Patentansprüche

1. Verfahren zum Löten einer Vielzahl von elektrischen Anschlüssen, wobei
- Kontaktelemente (15, 16) mit Lötanschlussflächen (6, 7, 8), die auf einer nichtmetallischen Scheibe (1) angeordnet sind, verlötet werden sollen und
- mittels eines Lötwerkzeugs (13), das eine Schleife oder eine Spule (13I) umfasst und das den Bereich von mehreren Lötanschlussflächen abdeckt, ein Magnetfeld mit einer vorbestimmten Frequenz in Richtung der Lötstellen ausgesandt wird, um diese induktiv zu erhitzen, **dadurch gekennzeichnet, dass** die Größe und die Form des Lötwerkzeugs (13) mit der Schleife oder der Spule (13I) in Abhängigkeit der Fläche, auf der sich mehrere Lötstellen befinden, die in einem Lötvorgang gleichzeitig erhitzt werden sollen, bemessen wird, wobei das Lötwerkzeug (13) - zusätzlich zu der Schleife oder der Spule - Komponenten zum Umlenken und Führen der Feldlinien des Magnetfeldes umfasst und dass die Frequenz der an die Schleife oder an die Spule angelegten Wechselspannung der Anschlussgeometrie angepasst und sie auf maximal 150 kHz eingestellt wird.

2. Verfahren nach Anspruch 1, **dadurch gekennzeichnet, dass** die Frequenz des Magnetfeldes zwischen 5 und 150 kHz eingestellt wird.

3. Verfahren nach Anspruch 1, **dadurch gekennzeichnet, dass** die Frequenz des Magnetfeldes zwischen 10 und 100 kHz eingestellt wird.

4. Verfahren nach Anspruch 1, **dadurch gekennzeichnet, dass** die Frequenz des Magnetfeldes zwischen 12 und 70 kHz eingestellt wird.

5. Verfahren nach Anspruch 1, **dadurch gekennzeichnet, dass** die Frequenz des Magnetfeldes zwischen 15 und 40 kHz eingestellt wird.

6. Verfahren nach einem der vorstehenden Ansprüche, **dadurch gekennzeichnet, dass** wenigstens ein Lötwerkzeug (13) direkt oder mit einem geringen Luftspalt an eine von den Lötstellen abgewandte Fläche der Scheibe angelegt wird und dessen Magnetfeld durch die Scheibe gesandt wird.

7. Verfahren nach einem der vorstehenden Ansprüche, **dadurch gekennzeichnet, dass** die mit den Lötanschlussflächen (6, 7, 8) zu verlötenden Kontaktelemente (15, 16) mit Hilfe von metallischen, insbesondere ferritischen, oder nichtmetallischen Anpressmitteln (18, 19) auf den Lötanschlussflächen fixiert werden.

8. Verfahren nach Anspruch 7, **dadurch gekennzeichnet, dass** mit Werkzeugen zum Greifen und Positionieren der Kontaktelemente (15, 16) kombinierte Anpressmittel verwendet werden.

9. Verfahren nach einem der vorstehenden Ansprüche, **dadurch gekennzeichnet, dass** die Scheibe (1) und das wenigstens eine Lötwerkzeug (13) wenigstens während des Lötvorgangs stationär in einer Vorrichtung (10) fixiert werden.

10. Verfahren nach einem der vorstehenden Ansprüche, wobei die Anschlussflächen oder die zu verlötenden Kontaktelemente oder beide mit einem bleihaltigen oder bleifreien Lötdepot (9), eventuell mit einem integrierten oder nachträglich aufgebrachten Flussmittel, versehen sind.

11. Verfahren nach einem der vorstehenden Ansprüche, **dadurch gekennzeichnet, dass** zum Führen und Anlegen des Lötwerkzeugs (13) an die Scheibe (1) oder der Scheibe an das Lötwerkzeug (13) ein Roboter verwendet wird.

12. Vorrichtung zur Durchführung des Verfahrens nach einem der vorstehenden Ansprüche, umfassend
- Mittel (10, 11, 12) zum Fixieren der Scheibe (1) während des Lötvorgangs,
- wenigstens ein Lötwerkzeug (13) mit wenigstens einer zum Aussenden eines Magnetfeldes geeigneten Schleife oder Spule (13I), dessen Größe einer Fläche eines auf der Scheibe angeordneten Anschlussfeldes mit mehreren Anschlussflächen entspricht,
**dadurch gekennzeichnet, dass** sie ferner umfasst
- Mittel zum gegenseitigen Positionieren des Lötwerkzeugs (13) und des Anschlussfeldes derart, dass das durch das Lötwerkzeug erzeugte Magnetfeld die Lötstellen zuverlässig erhitzt, wobei das Lötwerkzeug (13) - zusätzlich zu der Schleife oder der Spule - Komponenten zum Umlenken und Führen der Feldlinien des Magnetfeldes umfasst,
- einen Generator (13G), der an die Schleife oder an die Spule (13I) angeschlossen werden kann und der geeignet ist, eine Wechselspannung mit einer Frequenz von 5 bis 150 kHz zu erzeugen.

13. Vorrichtung nach Anspruch 12, deren Lötwerkzeug (13) mehr als eine Schleife oder Spule (13I) umfasst.

14. Vorrichtung nach einem der vorstehenden Vorrichtungsansprüche, deren Lötwerkzeug (13) mit einer elastischen Zwischenschicht für das Anlegen an eine Scheibenfläche versehen ist.

15. Vorrichtung nach einem der vorstehenden Vorrichtungsansprüche, mit einem Roboter zum Führen und Anlegen des wenigstens einen Lötwerkzeugs (13) an die Scheibe und/oder der Scheibe an das Lötwerkzeug.

16. Vorrichtung nach einem der vorstehenden Vorrichtungsansprüche, mit Anpressmitteln (18, 19), um die Kontaktelemente (15, 16) auf die Lötstellen zu drücken.

17. Vorrichtung nach Anspruch 16, deren Anpressmittel mit Greifwerkzeugen zum Positionieren der Kontaktelemente kombiniert sind.

18. Vorrichtung nach Anspruch 16 oder 17, deren Anpressmittel mit Komponenten zum Umlenken und Führen der Feldlinien des Magnetfeldes ausgestattet sind.
